# EUROPEAN PATENT APPLICATION

(11) **EP 1 297 980 A2**
(43) Date of publication of application: **02.04.2003**
(21) Application number: 02078951.7
(22) Date of filing: 24.09.2002
(51) Int. Cl.: B60J 3/02

(54) **Low encumbrance covering device for a mirror of a sun visor for vehicles**

(30) Priority: 28.09.2001 IT MI20012028
(71) Applicant: Industrialesud S.p.A., 64100 Teramo (IT)
(72) Inventor: Di Sante, Giuseppe, 64026 Roseto degli Abruzzi, Teramo (IT); Biggio, Mario, 64026 Roseto degli Abruzzi, Teramo (IT); D'Ambrosio, Patrizio, 64026 Roseto degli Abruzzi, Teramo (IT); Bessone, Giovanni, 12089 Villanova Mondovi', Cuneo (IT)
(74) Representative: De Gregori, Antonella

(57) **Abstract**

A low encumbrance covering device (10, 110) for a mirror (12) of a sun visor (14) for vehicles, where a support structure (130) for said mirror (12) is foreseen, and where, when the mirror (12) is shut, covering elements (20, 134) are arranged in front of the mirror (12); such covering elements (20, 134), when the mirror (12) is uncovered, occupy exclusively zones at least partly in front of said mirror (12) and/or in front of said support structure (130) of the mirror (12) itself.

## Description

The present invention refers to a low encumbrance covering device for a mirror of a sun visor for vehicles.

In the automobile industry sector in particular, it is necessary, for each component to be produced or to be assembled, to optimise to the greatest possible degree the manufacturing and assembly costs, also increasing as far as possible the overall reliability of the vehicle.

Therefore, in each application, it is recommended to foresee the assembly of simple and functional elements, in extremely short periods of time with respect to the prior art and according to simple and reliable methods.

Furthermore, it is necessary that any assembly of components for automobiles be carried out correctly and that each assembled component be extremely easy-to-use, functional and accessible to the end user to allow an advantageous use thereof.

In particular, it is recommended that such concepts be extended to all of the components of vehicles, both relative to the elements on the outside of the vehicle and those present inside the passenger compartment.

Regarding this, inside automobiles there are currently two sun visors, fixed to the roof panel coating in correspondence with the driver and passenger sides, each of which substantially consists of a flap which can be folded away hinged at the inside upper edge of the windscreen; their main function is that of protecting the driver or passenger from direct sunlight or from the reflection of the sun's rays.

Generally, they also have, in a central portion, a make-up mirror.

Such a mirror is very often equipped with a cover, mainly in order to prevent it from becoming covered with dust.

Mirror covers currently used consist of doors which are hinged on one side of the mirror, generally the upper side.

Alternatively, such doors can slide longitudinally across the mirror, and thus are hidden away in a suitable seat generally realised inside the visor.

In the aforementioned requirement of being able to exploit to the greatest possible degree the components of an automobile, the general purpose of the present invention is that of realising a covering device for a mirror of a sun visor for vehicles which allows its encumbrance in the visor itself to be limited as far as possible.

Another purpose of the low encumbrance covering device for a mirror of a sun visor for vehicles is that of increasing its functional and aesthetic properties, at the same time maintaining a substantial reliability and efficiency.

A further purpose of the present invention is that of realising a low encumbrance covering device for a mirror of a sun visor for vehicles which is particularly simple to construct and which allows a substantial reduction in total costs, both for production and for storage and assembly, in virtue of the advantages and functions achieved.

Yet another purpose of the present invention is that of indicating a low encumbrance covering device for a mirror of a sun visor for vehicles which is safe and extremely reliable with respect to the covers realised according to the prior art.

These and other purposes according to the present invention are achieved by realising a low encumbrance covering device for a mirror of a sun visor for vehicles as outlined in claim 1.

Further characteristics are foreseen in the subsequent claims.

Further characteristics and advantages of a low encumbrance covering device for a mirror of a sun visor for vehicles according to the present invention shall become clearer from the following description, given as an example and not for limiting purposes, referring to the attached schematic drawings in which:
Figure 1 is an axonometric view of a sun visor with a mirror, equipped with a first embodiment of a low encumbrance covering device according to the invention, where the mirror is covered;
Figure 2 is an axonometric view of the sun visor of figure 1, where the mirror is uncovered;
Figure 3a is an axonometric view of a second embodiment of a low encumbrance covering device according to the invention, where the mirror is covered;
Figure 3b is an axonometric view of the covering device of figure 3a, where the mirror is uncovered;
Figure 4 is a longitudinal section view of a visor, with a second embodiment of the covering device of figure 3a;
Figure 5 is a cross section of a visor, with the second embodiment of the covering device of figure 3a;
Figure 6 is a perspective view of a sun visor equipped with the low encumbrance covering device shown in figure 1, where the mirror is partially covered;
Figure 7 is a perspective view of a sun visor equipped with the low encumbrance covering device shown in figure 3a and 3b, where the mirror is partially covered.

With reference to the figures, a low encumbrance covering device for a mirror 12, generally rectangular in shape, of a sun visor 14 for vehicles is shown.

The sun visor 14 can, in particular, be realised in "MULTIPUR" technology or an equivalent; "MULTIPUR" technology, according to that which is described in Italian patent application no. MI2000A002227 of 16.10.2000, refers to a multilayer product, which foresees a first element consisting of a layer of semi-rigid spongy material, impregnated on one or both faces with polyurethane resin and placed between two layers of fibreglass and/or natural fibre continuously coupled with the central layer.

Moreover, the first element is coupled with a second element comprising a layer of semi-rigid spongy polymer impregnated on one or both faces with polyurethane resin and in turn coupled with a further layer of fibreglass and/or natural fibre.

It is obvious that alternative materials can be used in this context, in any case having determined requirements of lightness, ability to support itself, sound absorbency and flexibility and, in any case, constituting a structure with a variable thickness between 4 and 10 mm and a flat or curved shape in the longitudinal and transversal directions of the vehicle, according to the stylistic and functional requirements.

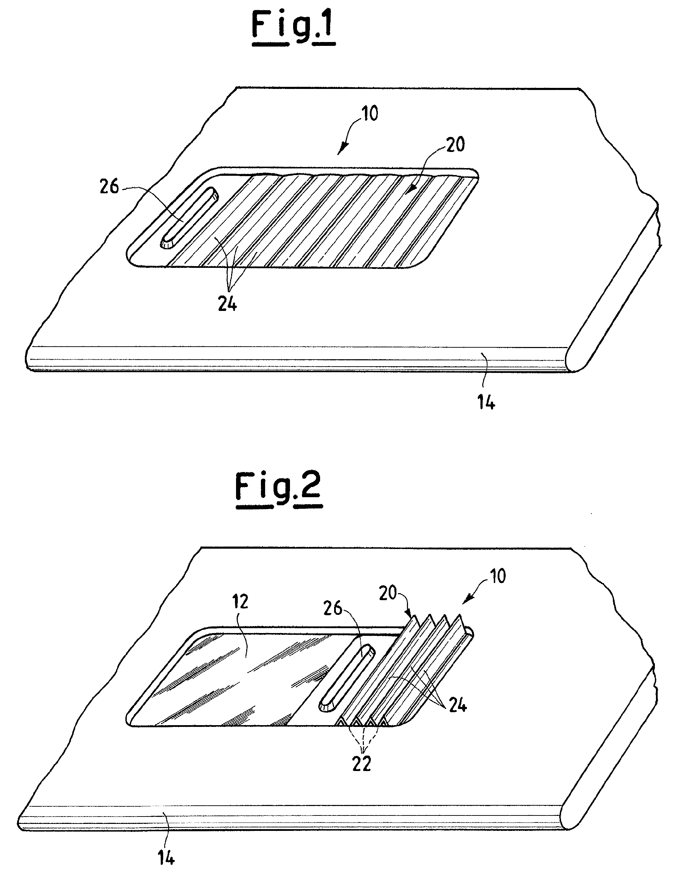

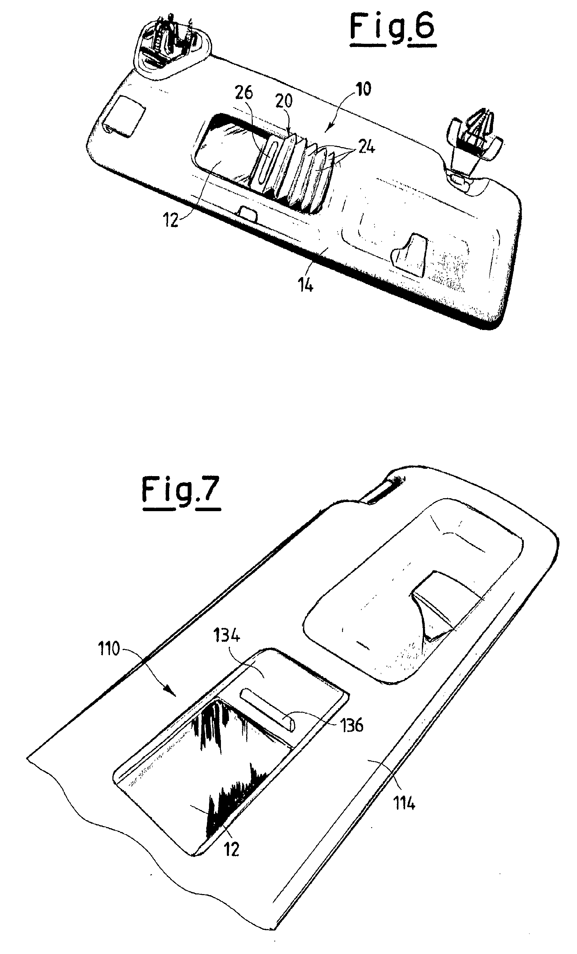

In figures 1, 2 and 6 a first embodiment of the covering device can be seen, wholly indicated with 10, which respectively partially and totally covers the mirror 12. The device 10 essentially comprises a covering element such as a bellows 20.

The bellows 20 comprises articulated strips 22, connected to portions 24 of material which is, for example, foldable, which slide between guides (not shown in the figures) arranged near to the edges of the mirror 12.

A portion 24, or a strip 22, near to an end of the bellows element 20, is equipped with a grip 26.

The operation of the first embodiment 10 of the low encumbrance covering device for a mirror 12 of a sun visor 14 for vehicles according to the invention is clear from that which is described above with reference to the figures, and in brief is the following.

In the case shown in figures 1 and 2 the mirror 12 is rectangular with a longer horizontal side. In such a situation typically the guides are situated in correspondence with the horizontal sides, or alternatively in correspondence with the vertical sides.

Through the grip 26, the strips 22 can be made to slide along the guides horizontally or vertically, respectively.

The portions 24, in this case rectangular, are forced to fold up and thus form a pack on one side of the mirror 12, progressively uncovering the mirror 12 itself to the user.

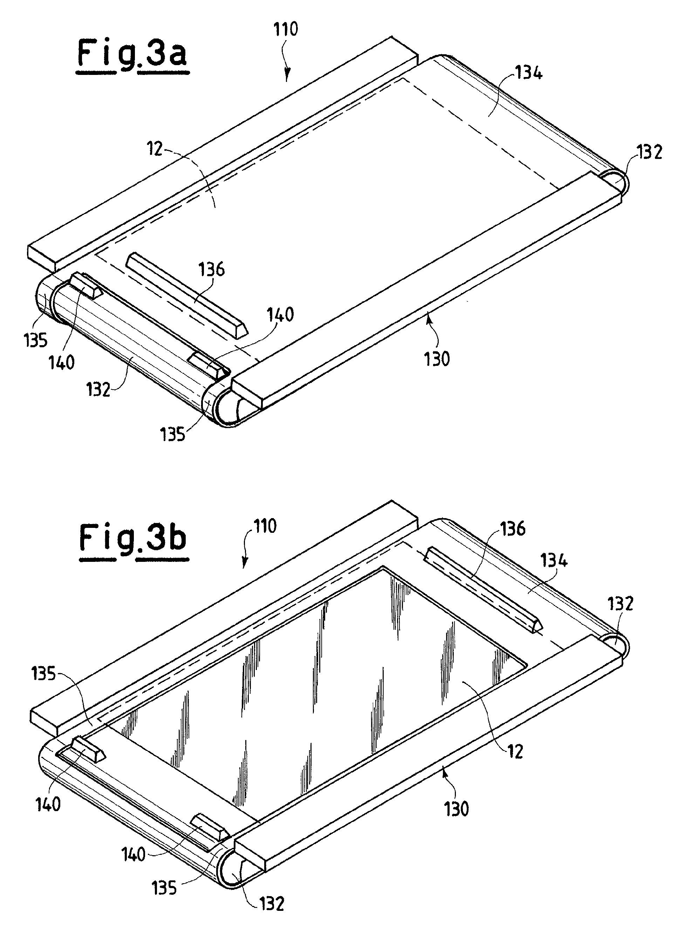

In figures 3a, 3b, 4, 5 and 7, on the other hand, a second embodiment of the covering device, wholly indicated with 110, is shown.

The device 110 comprises a support structure 130, for example made of plastic material, which surrounds the side and rear of the mirror 12 and is equipped, on two opposite sides, with sliding surfaces 132. As an alternative to the surfaces 132, rotating rollers can be used.

A covering element such as a band 134 in a closed loop is wound, surrounding the structure 130, between the two sliding surfaces 132, and has a width such as to cover the mirror 12.

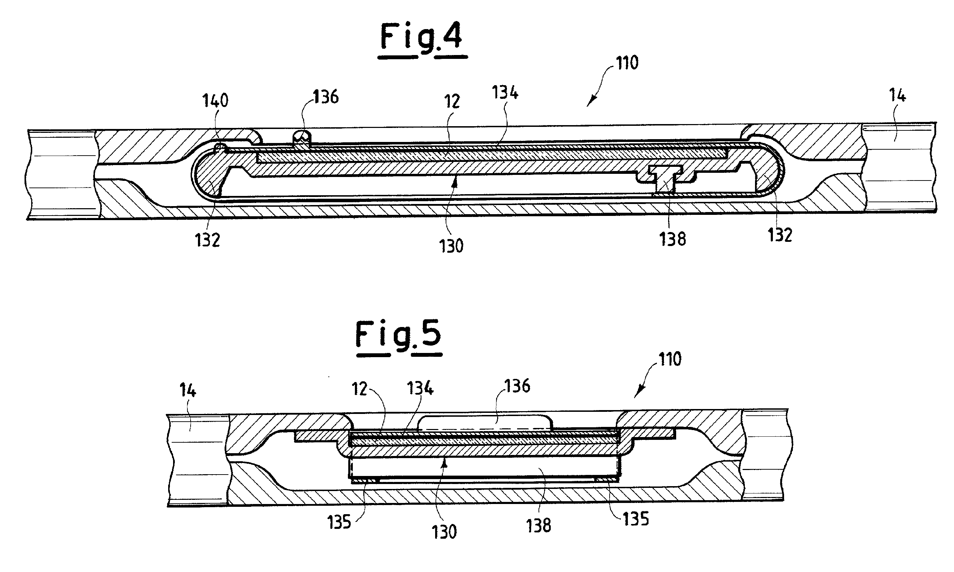

Furthermore, there can be support elements for the band 134; in particular, in figure 4, an intermediate support bar 138 can be seen which is situated between the two sliding surfaces 132 and on the opposite side with respect to the mirror 12.

The band 134 is equipped with a grip 136.

Moreover, the band 134 has a transparent zone, or a central lack of material, of a length substantially equal to that of the mirror 12.

In particular, in the case of a band 134 in which material is removed from the centre, and therefore where there are, at the two sides of the band 134, portions 135 of a smaller width, the structure 130 has guide elements, such as raised portions 140 shown in figures 3a and 3b.

The operation of the second embodiment 110 of the low encumbrance covering device for a mirror 12 of a sun visor 14 for vehicles according to the invention is clear from that which is described above with reference to the figures, and in brief is the following.

In the case shown in figures 3a, 3b, 4, 5 and 7 the mirror 12 is rectangular with a longer horizontal side. In such a situation typically the two sliding surfaces 132 are situated in correspondence with the vertical sides, or alternatively in correspondence with the horizontal sides.

Through the grip 136 the band 134 can be made to slide around the structure 130 and therefore around the mirror 12.

In this way the mirror 12 can progressively be covered and uncovered, exploiting the transparent zone or the zone of the band 134 without material.

The device 110, including the mirror 12, is inserted into a seat inside the visor 14, or else alternatively can be arranged above the visor 14 itself, through gluing, for example.

From the description which has been made the characteristics of the low encumbrance covering device for a mirror of a sun visor for vehicles object of the present invention are clear, just as the relative advantages are also clear, amongst which we recall:
- simple and reliable use;
- low weight of the covering device;
- very low production and assembly costs.

Above all, we believe it useful to highlight that the covering device for a mirror of a sun visor for vehicles, according to the present invention, has a very low encumbrance and, in particular, when the mirror is uncovered, it still occupies the same space which is taken up by the device itself when it covers the mirror.

This does not happen with devices of the prior art, since in the solution with a hinged door, when the mirror is uncovered, it occupies a space outside of the visor. On the other hand, in the solution with a sliding door, when the mirror is uncovered, it occupies extra space inside the visor.

Finally, it is clear that the low encumbrance covering device for a mirror of a sun visor for vehicles thus conceived is susceptible to numerous modifications and variants, all of which are covered by the invention; moreover, all of the details can be replaced with technically equivalent elements. In practice, the materials used, as well as the shapes and sizes, can be whatever according to the technical requirements.

## Claims

1. Low encumbrance covering device (10, 110) for a mirror (12) of a sun visor (14) for vehicles, where a support structure (130) for said mirror (12) is foreseen, and where, when the mirror (12) is shut, covering elements (20, 134) are arranged in front of the mirror (12), **characterised in that** said covering elements (20, 134), when the mirror (12) is uncovered, occupy exclusively zones at least partly in front of said mirror (12) and/or in front of said support structure (130) of the mirror (12) itself.

2. Covering device (10, 110) according to claim 1, **characterised in that** said covering elements (20, 134) comprise a bellows (20) equipped with articulated strips (22), connected to at least a portion (24) of foldable material, said strips (22) sliding between guides arranged near to edges of the mirror (12).

3. Covering device (10, 110) according to claim 2, **characterised in that** one of said portions (24), or one of said strips (22), near to an end of said bellows (20), is equipped with a grip (26).

4. Covering device (10, 110) according to claim 1, **characterised in that** said covering elements (20, 134) comprise a band (134) in a closed loop which surrounds said support structure (130) and has a width such as to cover the mirror (12).

5. Covering device (10, 110) according to claim 4, **characterised in that** said support structure (130) surrounds the side and rear of the mirror (12) and is equipped, on two opposite sides, with sliding surfaces (132) or rotating rollers for said band (134).

6. Covering device (10, 110) according to claim 5, **characterised in that** said support structure (130) has elements for supporting (138) and guiding (140) said band (134).

7. Covering device (10, 110) according to claim 6, **characterised in that** said support elements (138) comprise at least one intermediate support bar (138), which is situated between the two sliding surfaces (132) and on the opposite side with respect to the mirror (12), and **in that** said guide elements (140) comprise raised portions (140).

8. Covering device (10, 110) according to claim 4, **characterised in that** said band (134) has a transparent zone, or a lack of material in the centre, of a length substantially equal to that of the mirror (12).

9. Covering device (10, 110) according to claim 8, **characterised in that** the two sides of said band (134), without material in the centre, where there are portions (135) of a smaller width, are guided by raised portions (140), realised on said structure (130).

10. Covering device (10, 110) according to claim 4, **characterised in that** said band (134) is equipped with a grip (136) to make it easier for a user to slide it.

11. Covering device (10, 110) according to claim 2, **characterised in that** said mirror (12) is rectangular with a longer horizontal side and **in that** said guides are situated in correspondence with the horizontal sides, or alternatively in correspondence with the vertical sides of the mirror (12).

12. Covering device (10, 110) according to claim 5, **characterised in that** said mirror (12) is rectangular with a longer horizontal side and **in that** said sliding surfaces (132) are situated in correspondence with the horizontal sides, or alternatively in correspondence with the vertical sides of the mirror (12).
